# EUROPÄISCHE PATENTSCHRIFT

(11) **EP 0 827 971 B1**
(45) Veröffentlichungstag und Bekanntmachung des Hinweises auf die Patenterteilung: **13.08.2003**
(21) Anmeldenummer: 97115063.6
(22) Anmeldetag: 30.08.1997
(51) Int. Cl.: C08G 16/00, C08J 5/12

(54) **Vulkanisierbare Kautschukmischungen enthaltend urethanmodifizierte Novolake zur Steigerung der Stahlcordhaftung und Steifigkeit**
Vulcanizable rubber compositions containing urethane modified novolak for increasing the adhesion to steel cords and the stiffness
Compositions de caoutchouc vulcanisables contenant des novolaques modifiés par des groupes uréthanes pour augmenter l'adhésion au câbles d'acier et la rigidité

(30) Priorität: 06.09.1996 DE 19636204
(43) Veröffentlichungstag der Anmeldung: 11.03.1998
(73) Patentinhaber: Surface Specialties Germany GmbH & Co. KG, 65203 Wiesbaden (DE)
(72) Erfinder: Burkhart, Thomas, Dr., 65396 Walluf (DE); Wallenwein, Siegfried, 64572 Büttelborn (DE); Brindöpke, Gerhard, Dr., 65843 Sulzbach (DE); Walz, Gerd, Dr., 65207 Wiesbaden (DE)
(74) Vertreter: Deckers, Hellmuth, Dr.

(56) Entgegenhaltungen:
- EP-A- 0 440 036
- EP-A- 0 473 948
- DE-A- 2 002 023
- DE-A- 2 254 379
- US-A- 4 148 769
- CHEMICAL ABSTRACTS, Bd. 113, Nr. 10, 03 September 1990, Columbus, Ohio, US; Zusammenfassung Nr. 80643, 'Manufacture of carbamate-modified phenolic resins for flexibel coatings' Seite 127; XP002062434 & PL 136 592 A (WYZSZA SZKOLA INZYNIERSKA IM. KAZIMIERZA PULASKIEGO) 30.November 1988

## Beschreibung

Die Erfindung betrifft urethanmodifizierte Novolake, die in vulkanisierten Kautschukmischungen sowohl die Haftfestigkeit zwischen Kautschuk und Festigkeitsträger als auch die Steifigkeit an sich von Festigkeitsträgern auf Stahlcord- und Textilfaserbasis erhöhen.

Gute Haftung von vulkanisiertem Kautschuk an vermessingtem Stahlcord ist für die Langzeiteigenschaften von Stahlgürtelreifen von entscheidender Bedeutung. Die am häufigsten eingesetzten Haftungsverbesserer (Adhäsionspromotoren) basieren auf sogenannten Resorcin-Novolaken (EP-A 0 440 036) bzw. Resorcin (US-A 4,148,769; DE-B 20 02 023) alleine. Reines Resorcin wird dabei nur in der Verbindung mit Methylendonatoren wie Hexamethylentetramin ("Hexa") oder Hexamethoxymethylmelamin (HMMM) eingesetzt. Die auf diese Weise aufkondensierten Harze erhöhen den Verstärkereffekt und verbessern die Grenzflächenhaftung bei gleichzeitig erhöhter Steifigkeit der Gummimischung und verbesserter Verschleißfestigkeit der Lauffläche unter vielseitigen Beanspruchungsbedingungen. Der Einsatz von Resorcin alleine ist jedoch bezüglich des Gesundheits- und Umweltschutzes problematisch, weil Resorcin unter den Bedingungen der Kautschukverarbeitung verdampfen kann. Im Gegensatz zu freiem Resorcin geben Resorcin-Formaldehyd-Kondensationsprodukte (Resorcin-Novolake) deutlich weniger Dämpfe ab und werden in Kombination mit HMMM eingesetzt, obwohl sie für die Haftung weniger wirksam sind als freies Resorcin. Gleichzeitig liegen die Spannungswerte und vor allem die Shore A-Härte-Werte der mit solchen Resorcin-Novolaken modifizierten verstärkten Gummimischungen deutlich unter denen, die erreicht werden, wenn freies Resorcin zum Einsatz kommt. Desweiteren können Resorcin-Formaldehyd-Kondensationsprodukte aufgrund der starken Eigenfärbung nicht in solchen Kautschukmischungen eingesetzt werden, die für Anwendungszwecke gedacht sind, bei denen eine helle Farbe des vulkanisierten Kautschuks gefordert wird.

Als Resorcin-Formaldehyd-Kondensationsprodukte werden Produkte eingesetzt, wie sie z.B. durch Kondensation von Formaldehyd oder Formaldehyd abspaltenden Verbindungen mit Resorcin oder Gemischen aus Resorcin und einem weiteren Phenol erhalten werden können.

Es werden auch resorcinfreie Haftvermittler auf der Basis von funktionalisierten Melaminharzen (EP-A 0 473 948) angeboten, die als Haftungspromotor ähnlich gut wirken wie das freie Resorcin bzw. Resorcin-Novolake. Kautschukmischungen, die solche funktionalisierten Melaminharze enthalten, vulkanisieren jedoch langsamer als solche, die HMMM-Resorcin-Systeme enthalten. Desweiteren werden zur Herstellung solcher funktionalisierten Melaminharze Edukte, wie z.B. Acrylamid, verwendet, die als cancerogen eingestuft werden.

Der vorliegenden Erfindung lag somit die Aufgabe zugrunde, die genannten Nachteile der bekannten Produkte zu überwinden und ein neues Produkt zur Verfügung zu stellen, das problemlos in Kautschukmischungen einsetzbar ist. Dabei sollten die vorteilhaften Eigenschaften der bekannten Produkte gleichzeitig erreicht werden. Insbesondere sollte die vorteilhafte Wirkung des Resorcins in freier Form im Hinblick auf Haftung und Härtewerte erhalten bleiben, ohne die Umwelt zu belasten bzw. mit der Gummiherstellung befaßte Personen gesundheitlich zu gefährden.

Es wurde nun überraschenderweise gefunden, daß man die genannten Nachteile überwinden kann, wenn man in den Kautschukmischungen das Resorcin durch modifizierte Novolake ersetzt, die durch gleichzeitige Reaktion eines ein- oder mehrwertigen Phenols mit einem Aldehyd und einem Urethan in Gegenwart eines sauren Katalysators bei erhöhter Temperatur hergestellt wurden und keine störenden Anteile an freiem Ausgangsphenol enthalten.

Durch die Erfindung erreicht man sowohl die Haftfestigkeits-, Härte- als auch die Spannungswerte von mit Resorcin alleine hergestellten Kautschukmischungen, ohne daß die Umwelt mit toxikologisch bedenklichen Materialien belastet wird. Gleichzeitig lassen sich mit diesen neuen Haftungspromotoren im Gegensatz zu Resorcin-Novolaken helle Kautschukmischungen herstellen. Die erfindungsgemäßen Haftvermittler verleihen den vulkanisierbaren Kautschukmischungen eine verbesserte Haftung an den Festigkeitsträgern auf Stahlcord- oder Textilfaserbasis und erhöhen auch deren Steifigkeit.

Die mit den erfindungsgemäß verwendeten Haftungspromotoren hergestellten Kautschukmischungen lassen sich leichter und vorteilhafter verarbeiten im Vergleich zu entsprechenden Mischungen mit bekannten Haftungspromotoren auf Resorcinbasis.

Ganz besonders überraschend ist auch die Feststellung, daß die erfindungsgemäß verbesserte Haftung nach intensiver Feuchtigkeitseinwirkung aufdie vulkanisierten Kautschukmischungen bei höheren Temperaturen im Gegensatz zu vergleichbaren vulkanisierten Systemen sogar einen Anstieg zeigt.

Gegenstand der Erfindung sind daher vulkanisierbare Kautschukmischungen, enthaltend vulkanisierbare Kautschuke, einen Massenanteil von bis zu 20 % eines Novolaks und Melaminharze als Härtungsmittel, dadurch gekennzeichnet, daß der Novolak urethanmodifiziert ist und keine störenden Anteile an freiem Ausgangsphenol enthält, und hergestellt wird durch gleichzeitige Reaktion eines ein- oder mehrwertigen Phenols (A) mit einer Oxoverbindung (B) ausgewählt aus Aldehyden und Ketonen und einem Urethan (C) in Gegenwart eines sauren Katalysators (D) bei erhöhter Temperatur von 60 bis 200 °C. Diese Novolake wirken erfindungsgemäß als Haftvermittler und -verbesserer.

Die vulkanisierbaren Kautschukmischungen enthalten neben diesen erfindungsgemäß verwendeten modifizierten Novolaken und Melaminharzen als Härtungsmittel die üblichen Vulkanisiermittel, Füllstoffe und üblichen Zusatzstoffe.

Die Herstellung der modifizierten Novolake kann nach bekannten Methoden erfolgen, wie sie z.B. in der DE-C 22 54 379 beschrieben sind. Dabei kann das Urethan (C) vor oder während der Reaktion zugesetzt werden.

Für die Herstellung der erfindungsgemäß verwendeten modifizierten Novolake kommen prinzipiell alle phenolischen Verbindungen (A) in Frage, die mindestens 1 reaktives Wasserstoffatom am aromatischen Kern und mindestens eine phenolische Hydroxylgruppe besitzen und also in ihrer Reaktivität mit Aldehyden mindestens monofunktionell sind. Hierzu zählen einkernige oder mehrkernige phenolische Verbindungen, die in ihrer Reaktivität mit beispielsweise Formaldehyd monofunktionell, difunktionell, trifunktionell oder auch höherfunktionell sein können. Die gegenüber Oxoverbindungen wie Aldehyden und Ketonen reaktiven Wasserstoffatome sind solche, die an einem aromatischen Kern in ortho- oder para-Stellung zu einer Hydroxylgruppe oder einem anderen Substituenten mit +I- und/oder +M-Effekt stehen.

Geeignete Phenole sind ein- und mehrkernige Hydroxyaromaten, die gegebenenfalls mit linearen, verzweigten oder cyclischen Alkylgruppen mit 1 bis 20 Kohlenstoffatomen, Oxyalkylgruppen mit solchen Alkylresten oder Halogenatomen substituiert sind, wobei mindestens ein reaktionsfähiges Wasserstoffatom an einem der aromatischen Kerne gebunden ist. Die Phenole können einzeln oder in Mischung eingesetzt werden. Vorzugsweise werden Phenol selbst, die verschiedenen Kresol- und Xylenol-Isomeren, die Isomeren des Äthylphenols, des Propyl- bzw. Isopropylphenols sowie p- bzw. o-substituierte Alkylphenole mit bis zu 18, insbesondere bis zu 15 Kohlenstoffatomen in der Seitenkette eingesetzt. Es können auch mit olefinisch ungesättigten Gruppen substituierte Phenole verwendet werden, wie z.B. o- oder p-Vinylphenol, p-Isopropenylphenol, und mit Dicyclopentadien (DCPD) und/oder Styrol und/oder Kolophonium umgesetzte phenolische Körper.

Weiter sind geeignet mehrkernige einwertige Phenole wie die isomeren Hydroxynaphthaline, die gegebenenfalls wie oben beschrieben substituiert sein können, sowie einkernige mehrwertige Phenole wie Brenzcatechin, Resorcin, Hydrochinon, Pyrogallol und Phloroglucin.

Ferner können mehrkernige mehrwertige Phenole, wie z.B. Isomere des Diphenylolmethans, Diphenyloläthans, Diphenylolpropans (Bisphenol A) sowie Bishydroxyarylverbindungen eingesetzt werden, bei denen die aromatischen Körper über eine direkte Bindung, eine Äthenyl-, Äther-, Carbonyl-, Sulfonyl-, Carbonyloxy- oder Carbonamidgruppe verbunden sind, wie Dihydroxydiphenyl, Dihydroxystilben, Dihydroxydiphenyläther, Dihydroxybenzophenon, Dihydroxydiphenylsulfon, Dihydroxyphenylbenzoat und Dihydroxybenzanilid, die gegebenenfalls mit Alkyl-, Alkoxygruppen oder Halogenatomen wie oben erläutert substituiert sind. Auch andere mehrwertige mehrkernige Phenole, wie z.B. die isomeren Dihydroxynaphthaline und auch drei- und mehrwertige Hydroxyaromaten sind ebenfalls verwendbar.

Als Oxoverbindungen (B) kommen prinzipiell alle Aldehyd- und/oder Keton-Gruppen enthaltenden oder solche Gruppen hervorbringenden Verbindungen in frage, die gegenüber Phenolen, welche am aromatischen Ring reaktive Wasserstoffatome besitzen, reaktiv sind und mit diesen Kondensationsprodukte bilden können. Von den als Ausgangskomponenten verwendbaren Oxoverbindungen, die einzeln oder zu mehreren nacheinander oder im Gemisch eingesetzt werden können, werden bevorzugt lineare oder verzweigte aliphatische Aldehyde, wie Formaldehyd, Acetaldehyd und deren Homologen bzw. Isomeren mit 1 bis 18 Kohlenstoffatomen pro Molekül, insbesondere bis zu 12 Kohlenstoffatomen pro Molekül eingesetzt. Besonders bevorzugt ist die Verwendung von wäßrigen Formaldehydlösungen. Es können auch Ketone mit 3 bis 18, vorzugsweise bis zu 12 Kohlenstoffatomen verwendet werden. Bevorzugt sind z.B. Aceton, Methyläthylketon, Diäthylketon und Kampfer.

Als Urethane (C), die Ester der Carbamidsäure, werden insbesondere Umsetzungsprodukte von Harnstoff bzw. Harnstoffderivaten mit Alkoholen verwendet. Unter Harnstoffderivaten werden hier Alkyl- und Arylharnstoffe sowie Biuret und Semicarbazid verstanden, die mindestens eine unsubstituierte Amidgruppe enthalten. Als Alkohole eignen sich lineare und verzweigte aliphatische, cycloaliphatische und alkylaromatische Alkohole mit 1 bis 20 Kohlenstoffatomen, z.B. niedere aliphatische Alkohole wie Methyl-, Äthyl-, die verschiedenen Propyl-, Butyl-, Pentyl- und Hexylalkohole, Heptyl-, Octyl-, Nonyl-, Decylalkohol, ferner ungesättigte Alkohole wie Allylalkohol, cycloaliphatische Alkohole wie Cyclopentanol, Cyclohexanol, alkylaromatische Alkohole wie Benzylalkohol, Methylglykol sowie andere Monoäther von Glykolen wie Äthylenglykol-Monoäthyläther und -Monobutyläther.

Desweiteren können neben den einwertigen Alkoholen auch zwei-, drei-, bzw. mehrwertige lineare, verzweigte oder cyclische aliphatische Alkohole mit 2 bis 20 Kohlenstoffatomen eingesetzt werden. Es können auch Zuckeralkohole verwendet werden, die zusammen mit den mehrwertigen Alkoholen wie z.B. Pentaerythrit zu der Gruppe der Polyole zuzurechnen sind. Zu den Alkoholen, unabhängig ob aliphatisch, cycloaliphatisch oder alkylaromatisch, sind auch diejenigen zu zählen, bei welchen die OH-Gruppe nicht an einem endständigen Kohlenstoffatom fixiert ist, sondern an mittelständigen (sekundär) bzw. Verzweigungsstellen (tertiär). Zu den sekundären aliphatischen Alkoholen zählt z.B. 2-Butanol bzw. 2-Propanol; zu den tertiären aliphatischen Alkoholen gehört z.B. 2-Methyl-2-propanol (t-Butanol). Zu den verwendbaren Alkoholen gehören auch die Gruppe der Enole (olefinisch ungesättigten Alkohole), die Acyloine, Aminoalkohole, z.B. die Alkanolamine und die Hydroxycarbonsäuren, die gegebenenfalls intramolekulare Ester bilden können.

Für die obengenannte Umsetzungsreaktion eignen sich als Harnstoffkomponente, neben Harnstoff selbst, auch Abkömmlinge des Harnstoffs wie z.B. Semicarbazid als auch N-alkylierte Harnstoffe wie z.B. Methyl-, bzw. Äthylharnstoff. Desweiteren können auch die amidartigen Derivate organischer Säuren mit Harnstoff, die sogenannten Ureide, wie z.B. Acetylharnstoff verwendet werden.

Ferner können die zur Darstellung der Urethane verwendeten Harnstoffderivate auch direkt mit den phenolischen Verbindungen umgesetzt werden.

Zu der Gruppe der verwendbaren Urethane gehören auch die direkten Umsetzungsprodukte von Isocyansäureestern bzw. Arylisocyanaten mit einwertigen Alkoholen wie z.B. N-Phenylurethan, ein Umsetzungsprodukt von Phenylisocyanat mit Äthanol. Geeignete Isocyansäureester und Arylisocyanate sind Alkylmono-, di- und polyisocyanate mit 1 bis 20 Kohlenstoffatomen im Alkyl- bzw. Arylrest. Geeignete Monoisocyanate sind n- und isopropyl-Isocyanat, Butylisocyanat, Octylisocyanat, Octadecylisocyanat und Cyclohexylisocyanat; Phenylisocyanat, 1-Naphthylisocyanat, o-, m- und p-Tolylisocyanat und Benzylisocyanat. Geeignete Di- und Polyisocyanate sind zum Beispiel Tetra- und Hexamethylendiisocyanat, 2,2,4- und 2,4,4-Trimethylhexan-1,6-diisocyanat, Isophorondiisocyanat, Toluylendiisocyanat, sowie die Allophanate, Uretdione und Isocyanurate, die von diesen Isocyanaten abgeleitet sind. Desweiteren gehören die Reaktionsprodukte aus Chlorameisensäureestern mit Ammoniak ebenfalls zur Gruppe der Urethane.

Die Zusammensetzung der erfindungsgemäß als Haftungspromotoren verwendeten modifizierten Novolake ist in einem breiten Bereich variierbar. Vorzugsweise beträgt das Stoffmengenverhältnis ihrer Bestandteile (A) Phenol : (B) Aldehyd = 1 : 0,3 bis 1 : 0,95, insbesondere 1 : 0,5 bis 1 : 0,9 mol/mol, und das Stoffmengenverhältnis (A) Phenol : (C) Urethan = 1: 0,005 bis 1 : 1, insbesondere 1 : 0,03 bis 1 : 0,2 mol/mol.

Besonders bevorzugte Bestandteile sind dabei Phenol, Formaldehyd und Carbamidsäurebutylester (Butylurethan).

Zur weiteren Charakterisierung der erfindungsgemäß als Haftungspromotoren verwendbaren modifizierten Novolakharze können z.B. noch der Schmelzpunkt, die Viskosität ihrer Lösungen in einem geeigneten organischen Lösemittel sowie die Hydroxylzahl des Harzes herangezogen werden, wobei diese Werte in den bei Novolaken üblichen Bereichen liegen. Vorzugsweise werden solche Harze verwendet, die unter Normalbedingungen in fester, kleinteiliger Form vorliegen. Dabei sollte der Schmelzpunkt zumindest so hoch liegen, daß die Produkte beim Lagern bei Raumtemperatur und beim Transport nicht verklumpen können. Die erfindungsgemäßen modifizierten Novolake enthalten Massenanteile von weniger als 0,5 %, bevorzugt weniger als 0,1 %, besonders bevorzugt weniger als 0,01% an freien Phenolen der Komponente (A), bezogen auf die Masse des Novolaks.

Zur Herstellung der erfindungsgemäßen Novolake können auch bei der gemeinsamen Kondensation der phenolischen Verbindungen mit Oxoverbindungen und dem Urethan natürliche oder synthetische ungesättigte Kohlenwasserstoffe oder deren Derivate (E) mit 4 bis 40 Kohlenstoffatomen und mit einer oder mehreren Kohlenstoff-Kohlenstoff-Doppelbindungen, im letzteren Fall auch mit konjugierten Doppelbindungen, eingesetzt werden. Unter anderem können ungesättigte Fettsäuren, die daraus abgeleiteten fetten Öle, Fettsäureamide oder Fettalkohole verwendet werden. Geeignete Ausgangsverbindungen sind ferner ungesättigte Naturstoffe auf Terpenbasis, zum Beispiel Kolophonium. Als Kohlenwasserstoffverbindungen können Alkene, Diene oder noch höher äthylenisch ungesättigte aliphatische und aromatische Kohlenwasserstoffe verwendet werden. Bevorzugt geeignet sind z.B. Vinylaromaten, insbesondere Styrol. Der Massenanteil dieser Zusätze (E) bezogen auf die Masse des so modifizierten Novolaks aus den Edukten (A), (B), (C) und (E) beträgt 2 bis 40 %, bevorzugt 5 bis 25 %.

Die erfindungsgemäßen Novolake können unter Verwendung von sauren Katalysatoren (D) sowohl nach dem konventionellen Verfahren (z.B. DE-A 22 54 379) als auch nach dem Umlaufverfahren (US-A 5,089,589) hergestellt werden. Als saure Katalysatoren werden bevorzugt starke Mineralsäuren und/oder ihre sauren Derivate, insbesondere Schwefelsäure, Hydrogensulfate insbesondere von Alkalimetallen oder Ammonium, Halbester der Schwefelsäure mit aliphatischen Alkoholen mit 1 bis 20 Kohlenstoffatomen, Phosphorsäure, Salzsäure, oder organische Säuren wie Alkyl- und Arylsulfonsäuren mit 1 bis 20 Kohlenstoffatomen, insbesondere p-Toluolsulfonsäure, und die aliphatischen ein- und zweibasigen Carbonsäuren mit 1 bis 20 Kohlenstoffatomen, wie Chloressigsäure, Trifluoressigsäure, insbesondere Oxalsäure-Dihydrat verwendet. Ebenso geeignet sind auch Lewis-Säuren wie Aluminiumtrichlorid, Zinkchlorid und Zinnchlorid sowie Bortrifluorid und dessen Ätherate.

Die erfindungsgemäßen Haftungspromotoren können in allen bekannten vulkanisierbaren Kautschukmischungen eingesetzt werden.

Als geeignete, mit Schwefel vulkanisierbare Kautschuktypen können z.B. vorzugsweise Naturkautschuk, Polyisopren, Polybutadien, Styrolbutadienkautschuk, Acrylnitrilkautschuk, Butylkautschuk, Äthylen-Propylen-Dien-Terpolymer-Kautschuk (EPDM-Kautschuk) oder deren Gemische, wie man sie üblicherweise in der Fahrzeugreifenindustrie oder zur Herstellung technischer Gummiwaren einsetzt, verwendet werden. Die weiteren üblichen Bestandteile können beispielsweise Füllstoffe, wie Ruße, Kieselsäuren, Kreide, Kaoline sowie Pigmente anorganischer oder organischer Natur, wie Titandioxid, Eisenoxid, Phthalocyaninfarbstoffe, sein. Weitere übliche Bestandteile sind z.B. Vulkanisationsmittel aus der Gruppe Schwefel und schwefelspendende Verbindungen sowie Vulkanisationshilfsmittel, wie z.B. Beschleuniger und Aktivatoren. Ebenfalls üblich ist die Verwendung von Zusatzstoffen, beispielsweise aus der Gruppe Stearinsäure, Zinkoxid, Alterungsschutzmittel, die Klebrigkeit erhöhende Harze, wie auch Metallverbindungen zur zusätzlichen Verbesserung der Gummihaftung an Stahlcord, beispielsweise Salze des Kobalts oder Nickels mit einwertigen Carbonsäuren, vorzugsweise Naphthensäuren oder Isooctansäure. Zur Verbesserung der Verarbeitung sind ferner Zusätze von Mineralölen und Weichmachern, wie z.B. Phthalsäureestern, üblich.

Die Härtung der erfindungsgemäß verwendeten modifizierten Novolak-Harze wird durch den Zusatz von Methylenspendern in Form von Melaminharzen geeigneter Zusammensetzung bewirkt . Die Melaminharze können dabei in Substanz als kristalline oder flüssige Produkte oder, bevorzugt, als vorteilhaft verarbeitbare, rieselfähige Produkte nach ihrer vorherigen Adsorption auf geeigneten festen Trägermaterialien eingesetzt werden.

Die erfindungsgemäßen Haftungspromotoren werden in vulkanisationsfähigen Kautschukmischungen eingesetzt, die in üblicher Weise, z.B. in Innenmischern oder auf Mischwalzen, hergestellt werden können. Dabei kann es vorteilhaft sein, zur besseren Verteilung der erfindungsgemäßen Haftungspromotoren die Mischungstemperatur während einer beliebigen Mischungsphase auf einen Wert über dem Schmelzbereich des zugegebenen Haftungspromotorharzes zu erhöhen. Es ist ferner wichtig, daß die Härtungsmittel zur Vermeidung einer vorzeitigen Reaktion mit den vernetzbaren Harzkomponenten möglichst erst am Ende des Mischvorganges bei nicht zu hohen Temperaturen (80 bis 100 °C) eingearbeitet werden.

Im übrigen kann die Komponentenauswahl und die Festlegung ihrer Massenanteile in den vulkanisierbaren Kautschukmischungen nach bekannten Kriterien erfolgen. Die Vermischung der Komponenten bei höheren Temperaturen kann ebenfalls in bekannter Weise, z.B. bei 100 bis 160 °C, erfolgen, u.a. z.B. in üblichen heizbaren Innenmischern oder auf üblichen heizbaren Mischwalzen. Ebenso kann auch die Vulkanisation der Kautschukmischungen in bekannter Weise bei üblichen Temperaturen in üblichen heizbaren Vorrichtungen, gegebenenfalls unter Druck, erfolgen.

Der Massenanteil an erfindungsgemäßen Haftungspromotoren in den vulkanisierbaren Kautschukmischungen kann vorzugsweise bis zu 20 % betragen, insbesondere bis zu 15 %, besonders bevorzugt 0,5 bis 10 %, bezogen auf die Masse der vulkanisierbaren Kautschukmischung. Auch die Mitverwendung anderer bekannter Haftungspromotoren wie z.B. Resorcin ist, soweit sie keine nachteiligen bzw. schädlichen Wirkungen verursachen bzw. entfalten, im allgemeinen möglich.

Die vulkanisierbaren Kautschukmischungen, die die erfindungsgemäßen Haftungsverbesserer enthalten und die nach bekannten Methoden hergestellt, verarbeitet und vulkanisiert werden können, eignen sich sehr gut zur Herstellung von technischen Gummiartikeln, vorzugsweise von solchen, die Festigkeitsträger auf Stahlcord- oder Textilfaserbasis enthalten. Sie können insbesondere zur Herstellung von Schläuchen, Treibriemen, durch Festigkeitsträger verstärkte Dichtungen, Förderbändern und Fahrzeugreifen verwendet werden, da sie sowohl hervorragende Haftungseigenschaften auf den genannten Festigkeitsträgern, als auch eine im Vergleich zu den üblichen Haftungspromotoren überraschend hohe Härte bzw. Steifigkeit zeigen.

Die Erfindung wird durch die nachstehenden Beispiele näher erläutert. Dabei bedeutet GT Gewichtsteile (Massenanteile), und Angaben in % sind ebenfalls Massenanteile, bezogen auf die Masse der Mischung, sofern nichts anderes angegeben ist.

### Beispiel 1

### Herstellung eines modifizierten Novolaks

Für die Kondensationsreaktion und die Aufarbeitung des Reaktionsgemisches wird ein 2 Liter 4-Hals-Glaskolben verwendet, der mit thermostatisierter Heizung, Rührvorrichtung, Thermometer, Zulaufvorrichtung sowie Rückflußkühler mit Wasserabscheider versehen ist. Der Wasserabscheider besitzt ein höhenverstellbaren Siphon, der eine kontinuierliche Abtrennung des Wassers ermöglicht.

In den Reaktor werden 640 GT Phenol, 128 GT Carbamidsäurebutylester, 146 GT Xylol sowie 6 GT para-Toluolsulfonsäure gegeben; die Mischung wird auf 130 °C erhitzt. Nach Erreichen dieser Temperatur werden 442 GT einer 37 %igen wäßrigen Formaldehyd-Lösung aus einem Dosiergefäß innerhalb von 4,5 Stunden zugetropft. Während des Zulaufs erhöht sich die Temperatur der Mischung auf 150 °C. Nach 5 h Erhitzen am Rückfluß haben sich im Wasserabscheider 375 GT einer wäßrigen Phase abgeschieden, die weniger als 1 % Formaldehyd enthält.

Dem Ansatz werden sodann 6 GT Triäthanolamin zugegeben; das Lösungsmittel wird am absteigenden Kühler, zunächst unter Normaldruck, abdestilliert, bis eine Sumpftemperatur von 200 °C erreicht ist. Während dieses Vorganges wird der Kolben mit Stickstoff als Schutzgas gespült. Nach Erreichen von 200 °C wird bei dem durch eine Wasserstrahlpumpe erzeugten Unterdruck während 30 Minuten eine Wasserdampfdestillation zur Entfernung des nicht abreagierten Phenols durchgeführt. Anschließend wird nochmal während 30 min bei 200 °C ein Unterdruck (30 mbar = 3 kPa) angelegt. Danach wird der Destillationsrückstand abgekühlt. Man erhält 750 g eines hellgelben Harzes, welches einen Erweichungspunkt von 46 °C und als 50 %ige Lösung in Methoxypropanol eine Viskosität von 400 mPa·s bei 23°C aufweist. Der Massenanteil an freiem Phenol im Harz beträgt weniger als 1 %.

### Beispiel 2

Der nach Beispiel 1 hergestellte modifizierte Novolak wird auf seine Wirkungen in einer vulkanisierbaren Kautschukmischung geprüft. Dazu wird eine Kautschuk-Grundmischung 1 bei ca. 150 °C durch intensives Vermischen der Einzelkomponenten hergestellt. Von dieser Kautschuk-Grundmischung 1 werden jeweils entsprechende Mengen entnommen und in einer zweiten Mischstufe 2 bei Temperaturen oberhalb von 100 °C mit dem zu prüfenden Haftungspromoter vermischt und danach, in einer dritten Mischstufe 3, bei Temperaturen unter 100 °C der Schwefel, der Beschleuniger und das Härtungsmittel wie folgt zugegeben:

Kautschuk-Grundmischung 1, bestehend aus:
100 GT Naturkautschuk
60 GT Ruß
5 GT Aktive Kieselsäure
5 GT Zinkoxid
1 GT Stearinsäure
1 GT Alterungsschutzmittel

### Mischstufe 2:

172 GT Kautschuk-Grundmischung 1 werden jeweils vorgelegt; bei einer Temperatur von 130 °C werden jeweils 2,5 GT Haftungspromotorharz aus Beispiel 1 (= Beispiel 2.1) bzw. Resorcinnovolak (= nicht erfindungsgemäßes Vergleichsbeispiel 2.2) bzw. übliches freies Resorcin (= nicht erfindungsgemäßes Vergleichsbeispiel 2.3) eingemischt

### Mischstufe 3:

174,5 GT Kautschukmischung der Mischstufe 2 werden jeweils vorgelegt und bei einer Temperatur von 90 °C werden jeweils
5,0 GT Schwefel
0,8 GT Benzothiazyl-2-tert. butylsulfenamid
2,5 GT Melaminharz, flüssig 100 % ig
eingemischt.

Tabelle 1 gibt einen Überblick über das Verhalten des jeweiligen Gemisches beim Einmischen der Haftungspromotoren in der Mischstufe 2 und beim anschließenden Mischen in der Mischstufe 3 sowie bei der nachfolgenden Vulkanisation der aus der Mischstufe 3 jeweils erhaltenen vulkanisierbaren Mischung während 45 Minuten bei 145 °C in einer Prüfkörperform.
An den nach der Vulkanisation als Prüfkörper erhaltenen Vulkanisaten werden nach den in der Praxis üblichen Methoden folgende Eigenschaftsmerkmale geprüft:
a) - Reißfestigkeit und Reißdehnung gemäß DIN 53504
b) - Spannungswerte bei 10%, 25% und 50% Dehnung gemäß DIN 53504
c) - Härteprüfung nach Shore A gemäß DIN 53505
d) - Ausreißkraft und Bedeckungsgrad bei der Stahlcordhaftungsprüfung.

Tabelle 2 zeigt die zusammengefaßten Ergebnisse.

Wichtig sind die Ergebnisse der Stahlcordhaftungsprüfung, bei der, nach einer üblichen Methode, in besonderen Vulkanisationsformen Stahlcord der Konstruktion 2+2x 0,25 mm mit einem Kupfergehalt der Messingauflage von ca. 63 % in die vulkanisierbare Kautschukmischung eingebettet und diese dann vulkanisiert wird. Danach erfolgt eine Lagerung der vulkanisierten Probekörper 3 Tage bei 90 °C und 100% relativer Luftfeuchtigkeit (r.F.) sowie 7 Tage bei 90 °C und 100% relativer Luftfeuchtigkeit (r.F.).

Anschließend wird die zum Herausreißen der Stahlcordfäden aus der vulkanisierten Gummimischung erforderliche Kraft gemessen und der Bedeckungsgrad des Stahlcords angegeben. Darunter versteht man die am herausgezogenen Cord mit Gummi bedeckte Drahtfläche, die in Abstufungen von 10% geschätzt und durch Zahlenwerte von 1 bis 10 bewertet wird. Die Bewertungsziffern 1 bis 10 bedeuten folglich 10 bis 100% bedeckte Drahtfläche. Die Ergebnisse in der Tabelle 2 sind Mittelwerte aus Messungen von jeweils zehn Einzelprüfungen.

Aus den Meßwerten in Tabelle 2 geht klar hervor, daß mit der erfindungsgemäßen, vulkanisierten Kautschukmischung aus Beispiel 2.1 eine höhere Ausreißkraft und ein höherer Bedeckungsgrad erzielt wird als bei dem Vergleichssystem mit Resorcin des Vergleichsbeispiels 2.3 bzw. mit dem Resorcinnovolak des Vergleichsbeispiels 2.2.

Ferner sind Härte-und Spannungswerte deutlich besser als bei dem Resorcinnovolak und erreichen nahezu diejenigen des Vergleichsbeispiels 2.3. Darüber hinaus tritt bei dem erfindungsgemäßen Beispiel praktisch keine Belästigung der Beschäftigten durch Rauchentwicklung oder Geruch während der Verarbeitung und praktisch auch keine Belastung der Umwelt durch toxisches Material auf.

**Tabelle 1**

| **Beobachtungen beim Anfertigen der Mischungsstufen 2 und 3 sowie bei der Vulkanisation** | | | |
|---|---|---|---|
| Prüfungen | Beispiel 2.1 (Haftungspromotor nach Beispiel 1) | Vergleichsbeispiel 2.2 (Resorcinnovolak) | Vergleichsbeispiel 2.3 (Resorcin) |
| Rauchentwicklung: | keine | keine | sehr starke |
| Geruch: | nach Kautschuk | nach Kautschuk | starker Geruch nach Resorcin |

**Tabelle 2**

| **Prüfungen an den Vulkanisaten** | | | | |
|---|---|---|---|---|
| Prüfungen an den Vulkanisaten | | Beispiel 2.1 (Haftungspromotor nach Beispiel 1) | Vergleichsbeispiel 2.2 (Resorcinnovolak) | Vergleichsbeispiel 2.3 (Resorcin) |
| Reißfestigkeit | (MPa) | 25 | 24 | 23 |
| Reißdehnung | (%) | 381 | 360 | 328 |
| Spannungswert 10 % Dehnung | (MPa) | 1,4 | 0,9 | 1,5 |
| Spannungswert 25 % Dehnung | (MPa) | 2,0 | 1,5 | 2,2 |
| Spannungswert 50 % Dehnung | (MPa) | 3,0 | 2,5 | 3,3 |
| Härte Shore A | | 85 | 78 | 87 |
| Stahlcordhaftung : | | | | |
| Kraft/Bedeckungsgrad | (N/cm)/Bewertungszahl | | | |
| nach Lagerung bei: | 3 Tagen bei 90°C und 100%r.F. | 327/9 | 251/9 | 220/8 |
| | 7 Tagen bei 90°C und 100%r.F. | 297/9 | 245/8 | 153/3 |

## Patentansprüche

1. Vulkanisierbare Kautschukmischungen, enthaltend vulkanisierbare Kautschuke, einen Massenanteil von bis zu 20 % eines Novolaks und Melaminharze als Härtungsmittel, **dadurch gekennzeichnet, daß** der Novolak urethanmodifiziert ist und keine störenden Anteile an freiem Ausgangsphenol enthält, und hergestellt wird durch gleichzeitige Reaktion eines ein- oder mehrwertigen Phenols (A) mit einer Oxoverbindung (B) ausgewählt aus Aldehyden und Ketonen und einem Urethan (C) in Gegenwart eines sauren Katalysators (D) bei erhöhter Temperatur von 60 bis 200 °C.

2. Vulkanisierbare Kautschukmischungen nach Anspruch 1, **dadurch gekennzeichnet, daß** der Novolak Bausteine enthält abgeleitet von einer phenolischen Verbindung ausgewählt aus Phenol, o-Kresol; p-Kresol, 2,4- und 2,6-Xylenol.

3. Vulkanisierbare Kautschukmischungen nach Anspruch 1, **dadurch gekennzeichnet, daß** die. zur Modifizierung verwendeten Urethane ausgewählt sind aus Alkyl- und Alkylaryl-Urethanen mit 1 bis 20 Kohlenstoffatomen in dem vom Alkohol abgeleiteten Rest.

4. Vulkanisierbare Kautschukmischungen nach Anspruch 1, **dadurch gekennzeichnet, daß** Butylurethan zur Modifizierung des Novolaks eingesetzt ist.

5. Vulkanisierbare Kautschukmischungen nach Anspruch 1, **dadurch gekennzeichnet, daß** das modifizierende Urethan Bausteine von weiteren Verbindungen (E) enthält ausgewählt aus natürlichen und synthetischen Kohlenwasserstoffen mit 4 bis 40 Kohlenstoffatomen und einer oder mehreren gegebenenfalls konjugierten Kohlenstoff-Kohlenstoff-Doppelbindungen ungesättigten Fettsären mit 4 bis 40 Kohlenstoffatomen und den davon abgeleiteten fetten Ölen, Fettsäureamiden und Fettalkoholen, Kolophonium und anderen Harzsäuren und Harzsäuregemischen.

6. Vulkanisierbare Kautschukmischungen nach Anspruch 5, **dadurch gekennzeichnet, daß** der Massenanteil an den Verbindungen (E) in dem modifizierten Novolak zwischen 2 und 40 % beträgt.

7. Verfahren zur Herstellung von vulkanisierbaren Kautschukmischungen nach Anspruch 1, **dadurch gekennzeichnet, daß** die Melaminharze als rieselfähige Produkte adsorbiert auf festen Trägermaterialien eingesetzt werden.

8. Vulkanisierbare Kautschukmischungen nach Anspruch 1, **dadurch gekennzeichnet, daß** die Kautschukmischungen zusätzlich Festigkeitsträger ausgewählt aus Stahlcord und Textilfasern enthalten.

9. Verwendung von gemäß Anspruch 1 definierten urethanmodifizierten Novolaken als Haftungsverbesserer für Festigkeitsträger in vulkanisierbaren Kautschukmischungen, **dadurch gekennzeichnet, daß** als Härtungsmittel für den Novolak ein Melaminharz eingesetzt wird.

## Claims

1. A vulcanizable rubber blend comprising vulcanizable rubbers, a mass fraction of up to 20% of a novolak and melamine resins as curing agent, wherein the novolak is urethane-modified, contains no interfering amounts of free starting phenol and is prepared by simultaneous reaction of a monohydric or polyhydric phenol (A) with an oxo compound (B), selected from aldehydes and ketones, and a urethane (C) in the presence of an acidic catalyst (D) at an elevated temperature of 60 to 200°C.

2. The vulcanizable rubber blend as claimed in claim 1, wherein the novolak contains building blocks derived from a phenolic compound selected from phenol, o-cresol, p-cresol, 2,4- and 2,6-xylenol.

3. The vulcanizable rubber blend as claimed in claim 1, wherein the urethanes used for modification are selected from alkyl- and alkylarylurethanes having 1 to 20 carbon atoms in the radical derived from the alcohol.

4. The vulcanizable rubber blend as claimed in claim 1, wherein butylurethane is used to modify the novolak.

5. The vulcanizable rubber blend as claimed in claim 1, wherein the modifying urethane contains building blocks of further compounds (E) selected from natural and synthetic hydrocarbons having 4 to 40 carbon atoms and one or more optionally conjugated carbon-carbon double bonds, unsaturated fatty acids having 4 to 40 carbon atoms and the fatty oils derived therefrom, fatty amides and fatty alcohols, colophony and other resin acids and resin acid mixtures.

6. The vulcanizable rubber blend as claimed in claim 5, wherein the mass fraction of the compounds (E) in the modified novolak is between 2 and 40%.

7. A process for the preparation of vulcanizable rubber blends as claimed in claim 1, wherein the melamine resins are used in the form of flowable products adsorbed onto solid carrier materials.

8. The vulcanizable rubber blend as claimed in claim 1, which additionally contains strength media selected from steel cord and textile fibers.

9. The use of urethane-modified novolaks defined in claim 1 as adhesion improvers for strength media in vulcanizable rubber blends, wherein a melamine resin is used as a curing agent for the novolak.

## Revendications

1. Mélanges de caoutchoucs vulcanisables, contenant des caoutchoucs vulcanisables, une proportion jusqu'à 20 % en masse d'une novolaque et des résines mélamine comme agents durcisseurs, **caractérisés en ce que** la novolaque est modifiée par un uréthane et ne contient pas de teneurs gênantes en phénol libre, et **en ce qu'**elle est préparée par réaction simultanée d'un phénol (A) mono ou polyhydroxylé avec un composé oxo (B) choisi parmi les aldéhydes et les cétones et un uréthane (C) en présence d'un catalyseur acide (D) à température élevée de 60 à 200 °C.

2. Mélanges de caoutchoucs vulcanisables selon la revendication 1, **caractérisés en ce que** la novolaque contient des éléments structurels dérivés d'un composé phénolique choisi parmi le phénol, l'o-crésol, le p-crésol, le 2,4- et 2,6-xylénol.

3. Mélanges de caoutchoucs vulcanisables selon la revendication 1, **caractérisés en ce que** les uréthanes utilisés pour la modification sont choisis parmi les alkyl- et alkylaryl-uréthanes avec de 1 à 20 atomes de carbone dans le groupe dérivé de l'alcool.

4. Mélanges de caoutchoucs vulcanisables selon la revendication 1, **caractérisés en ce qu'**on utilise le butyluréthane pour la modification de la novolaque.

5. Mélanges de caoutchoucs vulcanisables selon la revendication 1, **caractérisés en ce** l'uréthane modifiant contient des éléments structurels d'autres composés (E) choisis parmi les hydrocarbures naturels et synthétiques avec de 4 à 40 atomes de carbone et une ou plusieurs doubles liaisons carbone-carbone éventuellement conjuguées, les acides gras insaturés avec de 4 à 40 atomes de carbone et les huiles grasses, les amides d'acide gras et les alcools gras qui en dérivent, la colophane et d'autres acides résiniques et mélanges d'acides résiniques.

6. Mélanges de caoutchoucs vulcanisables selon la revendication 5, **caractérisés en ce que** la proportion en masse en composés (E) dans la novolaque modifiée est entre 2 et 40 %.

7. Procédé pour la préparation de mélanges de caoutchoucs vulcanisables selon la revendication 1, **caractérisé en ce qu'**on utilise les résines mélamine sous la forme de produits s'écoulant librement adsorbés sur des matériaux supports solides.

8. Mélanges de caoutchoucs vulcanisables selon la revendication 1, **caractérisés en ce que** les mélanges de caoutchoucs contiennent de plus des supports de rigidité choisis parmi les câbles d'acier et les fibres textiles.

9. Utilisation de novolaques modifiées par un uréthane définies selon la revendication 1 comme agent d'amélioration d'adhérence pour des supports de rigidité dans des mélanges de caoutchoucs vulcanisables, **caractérisée en ce qu'**on utilise comme agent durcisseur pour la novolaque une résine mélamine.
